# EUROPEAN PATENT SPECIFICATION

(11) **EP 3 835 833 B1**
(45) Date of publication and mention of the grant of the patent: **16.10.2024**
(21) Application number: 20204929.2
(22) Date of filing: 30.10.2020
(51) Int. Cl.: G01V 1/01, G01V 1/28, G08B 21/10

(54) **IMPROVED MONITORING AND EARLY WARNING SYSTEM**
VERBESSERTES ÜBERWACHUNGS- UND FRÜHWARNSYSTEM
SYSTÈME AMÉLIORÉ DE SURVEILLANCE ET D'AVERTISSEMENT PRÉCOCE

(30) Priority: 10.12.2019 IT 201900023541
(43) Date of publication of application: 16.06.2021
(73) Proprietor: Wise Robotics Societa' a Responsabilita' Limitata, 00131 Roma (IT)
(72) Inventor: ALESSANDRONI, Gianni, 00131 Roma (IT)
(74) Representative: Studio Torta S.p.A.

(56) References cited:
- EP-A1- 3 115 981
- IT-A1- 201600 102 545
- US-A1- 2014 067 284
- US-A1- 2014 188 394

## Description

### CROSS-REFERENCE TO RELATED APPLICATIONS

This Patent Application claims priority from Italian Patent Application No. 102019000023541 filed on December 10, 2019.

### TECHNICAL SECTOR OF THE INVENTION

The present invention relates to an improved system for monitoring vibrations of fixed structures (e.g., buildings, monuments, churches, bridges, viaducts, etc.), for detecting earthquakes and structural failures of the monitored structures, as well as any potentially dangerous phenomena/events (e.g., landslides/mudslides, hydrogeological events, subsidence phenomena, etc.) and for activating corresponding early warning procedures.

Moreover, the present invention can also be advantageously exploited for the validation of soil consolidation techniques (in particular, techniques based on bacterial calcification).

### BACKGROUND

The Applicant's Italian patent No. 102016000102545 (hereinafter referred to for brevity's sake as IT'545) concerns a smart system for monitoring vibrations of fixed structures and for early warning for earthquakes and structural failures of the monitored structures.

In particular, the smart monitoring and early warning system according to IT'545 comprises:
- a processing system based on a cloud computing architecture; and
- a smart monitoring network that includes monitoring devices coupled to fixed structures (e.g. buildings).

Each monitoring device is connected:
- to the processing system via one or more telecommunication networks (e.g., one or more networks based on IP protocol, i.e. the Internet network, for example via Ethernet and/or Wi-Fi and/or WiMAX and/or UMTS and/or LTE technology, etc.); and
- in peer-to-peer mode with one or more of the other monitoring devices.

In particular, each monitoring device is coupled to a respective fixed structure and comprises a respective vibration sensor (for example based on MEMS technology) configured to measure vibrations of said respective fixed structure.

Furthermore, each monitoring device also comprises a respective electronic control and processing unit programmed to detect, on the basis of the data supplied by the respective vibration sensor and on the basis of a respective reference structural model of the respective fixed structure, potential warning situations related to earthquakes (i.e., the presence of P waves generated by an earthquake) and/or to structural failures of the respective fixed structure.

More specifically, each monitoring device, following the detection of a potential warning situation related to an earthquake,
- sends corresponding potential warning messages to the processing system and to the other monitoring devices connected in peer-to-peer mode with said monitoring device,
- awaits confirmation and/or non-confirmation messages of the potential warning situation,
- decides, on the basis of the confirmation and/or non-confirmation messages received, whether the potential warning situation is confirmed or not and,
- if the potential warning situation is not confirmed, updates the respective reference structural model.

Furthermore, each monitoring device, following the detection of a potential warning situation related to a structural failure, sends a corresponding potential warning message to the processing system.

Moreover, each monitoring device, if it receives a message indicating a potential warning situation related to an earthquake detected by one of the other monitoring devices connected in peer-to-peer mode with said monitoring device, responds with a message of confirmation or non-confirmation of said potential warning situation based on the data supplied by the respective vibration sensor and on the respective reference structural model.

Instead, the processing system, following the receipt of messages indicating a potential warning situation related to an earthquake detected by one or more monitoring devices,
- decides, on the basis of the number and of the geographical position of the monitoring devices that have detected this potential warning situation, whether said potential warning situation is confirmed or not,
- if the potential warning situation is not confirmed, sends non-confirmation messages to the monitoring device(s) that has/have detected said potential warning situation,
- if the potential warning situation is instead confirmed,
   - sends confirmation messages to the monitoring devices that have detected said potential warning situation and
   - implements corresponding early warning actions (for example, it sends warning messages to people/entities/organisations/companies/etc. present in the area affected by the earthquake and activates automatic safety procedures (e.g., of the type Machine-to-Machine - M2M) such as, for example, bringing to the floor and opening the doors of the lifts, closing the gas distribution valves, slowing down the high-speed trains, signalling the event in the operating rooms of the hospitals, etc.).

Furthermore, even if it receives a message indicating a potential warning situation related to a structural failure detected by a monitoring device, the processing system implements corresponding early warning actions.

The smart monitoring network actually represents a distributed neural network of the IoT type (i.e., "Internet of Things"), where each node (i.e. each monitoring device) is directly interconnected, in peer-to-peer mode, with the other neighbouring nodes so as to guarantee the maximum information propagation speed.

The smart monitoring network does not depend directly on central systems and learns day by day to understand the environment in which it is located. In fact, each monitoring device is able to learn the characteristics of the site in which it is installed, comparing its own data with those of the other neighbouring monitoring devices.

The monitoring devices therefore learn to distinguish the P waves of an earthquake that precede the corresponding destructive S waves by sharing the data on the vibrations they receive and by activating, if necessary, the early warning procedures. In this way, the smart monitoring and early warning system according to IT'545 is able to generate an early warning with, on average, 5-15 seconds in advance with respect to the arrival of the destructive S waves.

The system subject-matter of IT'545 is very reliable, because the smart monitoring network must be stimulated in more nodes so to be able to be activated. A single positive is not enough, but only the identification of a wave P by more monitoring devices allows to generate the cascade effect.

Furthermore, even if a building undergoes structural failure phenomena (even not directly related to seismic phenomena), the system according to IT'545 is still able to activate early warning/safety procedures. In fact, the data stream sent by the monitoring devices is received and analysed in this sense by the processing system, thus allowing to promptly signal anomalous vibrations that are detected knowing (from the information coming from the neighbouring monitoring devices) that these vibrations are not attributable to an earthquake movement.

The smart monitoring network behaves similarly to a network of neurons by implementing a first level of artificial intelligence directly in the network itself. In fact, each single monitoring device processes the signals received from the respective vibration sensor and, in a totally autonomous way, decides which data/information is to be reported to the processing system and/or to the neighbouring monitoring devices.

Moreover, the use of peer-to-peer connections between neighbouring monitoring devices together with the data analysis distributed on two levels (i.e., at the smart monitoring network level and at the level of the processing system based on cloud computing architecture) make said smart monitoring network very stable, error-proof and, above all, very fast because the processing takes place without a roundtrip to/from a central server (as, instead, occurs in centralised systems).

US 2014/188394 A1 discloses a system, method and/or software for determining at least one characteristic of at least one structure. A server sub-system includes a processor set and seismic software that runs on the processor set. The sever sub-system being in data communication with a communication network. The server sub-system receives, through the communication network, first detected movement information, relating to seismically-induced physical movement of a first client device. The server sub-system performs structure-characteristic determination, by its seismic software, to determine at least one structure characteristic of a first structure based, at least in part, upon the first detected movement information. Preferably, detected movement data from many client devices is utilized in performing the structure-characteristic determination.

EP 3 115 981 A1 discloses a technology capable of widening the detection and prediction range of disaster and increasing precision. In a disaster response system, each disaster-sensing device has multiple sensors obtaining each of the multiple kinds of measurement data at the arrangement position in a chronological order, a detection processing section processing at least one kind of measurement data obtained by at least one of the multiple sensors and generating detection index data of disaster generation detection, a prediction processing section processing the multiple kinds of measurement data obtained by the multiple sensors in a chronological order and generating prediction index data of disaster generation prediction, and a wireless communication section transmitting a wireless signal indicating at least one of the detection index data and the prediction index data. A server device has an information collection section receiving, from a relay device, the detection index data at each arrangement position and the prediction index data at each arrangement position sent from each disaster-sensing device.

### OBJECT AND SUMMARY OF THE INVENTION

Object of the present invention is to try to improve operating efficiency, as well as effectiveness and reliability of use, of the smart monitoring and early warning system according to IT'545.

This and other objects are achieved by the present invention as it relates to a monitoring and early warning system, as defined in the attached claims.

### BRIEF DESCRIPTION OF THE DRAWINGS

For a better understanding of the present invention, some preferred embodiments, provided purely by way of nonlimiting example, will be disclosed hereinafter with reference to the accompanying drawings (not to scale), wherein:
- Figure 1 schematically shows a monitoring and early warning system according to a preferred embodiment of the present invention;
- Figures 2 and 3 schematically show two types of monitoring devices that can be used in the monitoring and early warning system of Figure 1; and
- Figure 4 schematically shows a data acquisition, processing and analysis method according to a preferred embodiment of the present invention.

### DETAILED DESCRIPTION OF PREFERRED EMBODIMENTS OF THE INVENTION

The following description is provided to enable a person skilled in the art to make and use the invention. Various modifications to the presented embodiments will be immediately evident to persons skilled in the art and the generic principles disclosed herein could be applied to other embodiments and applications without, however, thereby departing from the scope of protection of the present invention as defined in the attached claims.

The Applicant felt the need to carry out a very in-depth study in order to try to improve the smart monitoring and early warning system according to IT'545 (in particular, to try to improve operating efficiency, and effectiveness and reliability of use thereof), thus achieving the present invention.

In particular, the present invention stems from Applicant's innovative idea to use, in addition to the vibration sensors, also one or two further sources of information, namely:
- satellite positioning devices (conveniently based on Real-Time Kinematic (RTK) satellite positioning technology, preferably Global Positioning System (GPS) RTK technology) for detecting (with extreme accuracy) movements of the monitored fixed structures (more specifically, in order to detect and monitor slow movements due to landslides, hydrogeological events and subsidence phenomena, conveniently with an accuracy lower than one centimetre); and,
- preferably, also devices (for example of the extensometer-type) for monitoring damages/fissures/cracks of the monitored fixed structures (more specifically, for studying, preferably with an accuracy lower than a tenth of a millimetre, the dynamics of the fissure pattern of the monitored structures).

Thanks to the use of more sources of information, the system according to the present invention is able to implement even more reliable decision logics and more accurate and punctual analyses than the system according to IT'545.

In particular, the joint analysis of the data supplied by the different devices allows to carry out a much more accurate assessment of the behaviour of a monitored structure with respect to the case of using the vibration sensors alone.

Furthermore, the joint use of more sources of information also allows to carry out more in-depth and detailed analyses not only at the level of single monitored structures, but also at the level of the territory where these structures are located.

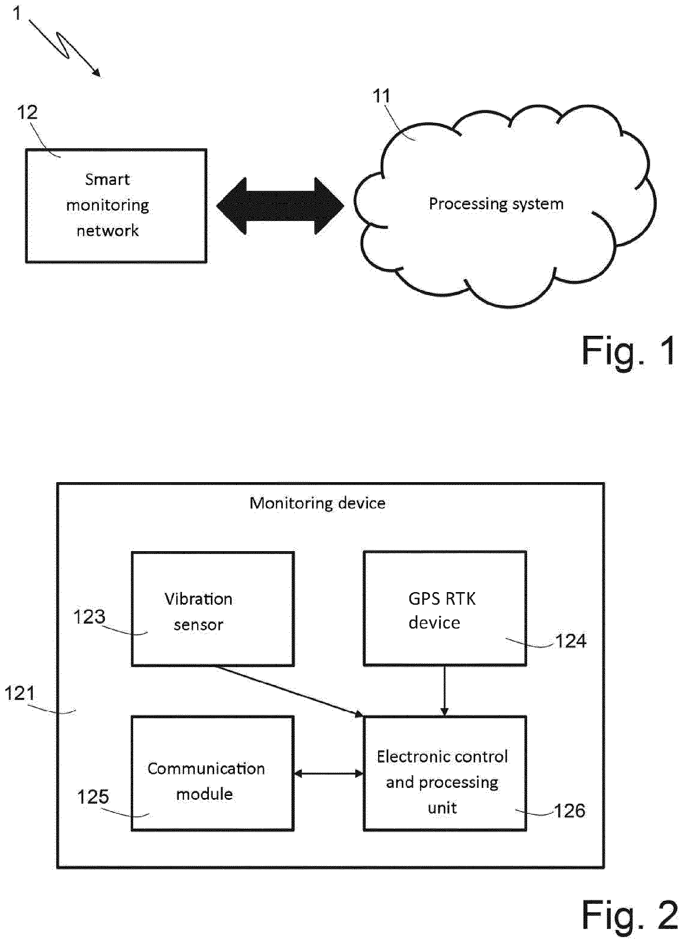

For a better understanding of the present invention, Figure 1 schematically shows a monitoring and early warning system (denoted as a whole with 1) according to a preferred embodiment of the present invention. In particular, Figure 1 shows a block diagram representing a high-level architecture of the monitoring and early warning system 1.

In detail, the monitoring and early warning system 1 includes:
- a processing system 11, preferably based on a cloud computing architecture; and
- a smart monitoring network 12 connected to the processing system 11 via one or more telecommunication networks (e.g., one or more networks based on IP protocol, i.e. the Internet network - for example, via Ethernet and/or Wi-Fi and/or WiMAX and/or GSM/GPRS and/or UMTS and/or LTE and/or 5G technology, etc.).

The smart monitoring network 12 includes a plurality of monitoring devices coupled to fixed structures arranged in a given region of the Earth's surface, such as buildings for residential and commercial use, public and private buildings and offices, institutional buildings, hospitals, barracks, railway and underground stations, airports, power generation and distribution plants, gas distribution networks, monuments, museums, churches, mosques, synagogues, bridges, etc.

Each monitoring device is connected in peer-to-peer mode to a plurality of other neighbouring monitoring devices (i.e. coupled to fixed structures arranged near the respective fixed structure to which said monitoring device is coupled) via one or more telecommunication networks, preferably one or more networks based on IP protocol, conveniently the Internet network.

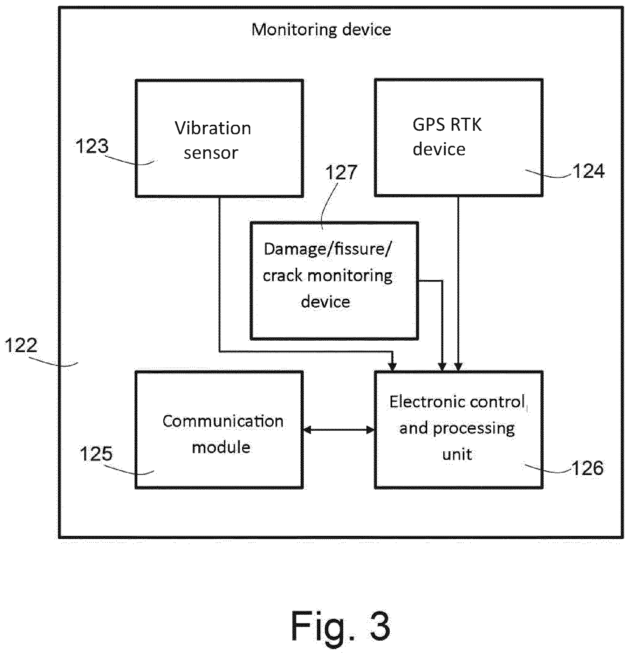

Figures 2 and 3 schematically show (in particular, by means of block diagrams) two high-level architectures that can be used for the monitoring devices of the smart monitoring network 12 of the monitoring and early warning system 1.

In particular, Figure 2 shows a first type of monitoring devices 121, while Figure 3 shows a second type of monitoring devices 122.

More in detail, as shown in Figure 2, each monitoring device 121 belonging to the first type shown in Figure 2 includes:
- a respective vibration sensor 123 (for example, based on one or more accelerometers realized via MEMS technology (i.e., Micro Electro-Mechanical Systems)), which is configured to detect and measure vibrations of the respective fixed structure to which said monitoring device 121 is coupled;
- a respective satellite positioning device based on GPS RTK technology 124 (hereinafter and in Figure 2 indicated for brevity's sake as GPS RTK device 124), which is configured to detect and measure any movements/displacements of the respective fixed structure to which said monitoring device 121 is coupled;

- a respective communication module 125 (conveniently based on Ethernet and/or Wi-Fi and/or WiMAX and/or GSM/GPRS and/or UMTS and/or LTE and/or 5G technology, etc.); and
- a respective electronic control and processing unit 126 connected
   - to the respective vibration sensor 123 to receive quantities (conveniently carried via data and/or signals) indicating vibrations measured by said vibration sensor 123,
   - to the respective GPS RTK device 124 to receive quantities (conveniently carried via data and/or signals) indicating movements/displacements measured by said GPS RTK device 124, and
   - to the respective communication module 125 to exchange data and/or messages with the processing system 11 and with the other monitoring devices 121, 122 connected in peer-to-peer mode with said monitoring device 121.

Instead, each monitoring device 122 belonging to the second type shown in Figure 3 includes, in addition to the respective vibration sensor 123, the respective GPS RTK device 124, the respective communication module 125 and the respective electronic control and processing unit 126, also a respective device (for example of the extensometer-type) configured to monitor one or more damages/fissures/cracks of the respective fixed structure to which said monitoring device 122 is coupled and to detect and measure any variations of said damage(s) and/or fissure(s) and/or crack(s) (hereinafter and in Figure 3 said device being indicated for brevity's sake as a damage/fissure/crack monitoring device 127).

Furthermore, in case of the monitoring device 122 belonging to the second type shown in Figure 3, the respective electronic control and processing unit 126 is also connected to the respective damage/fissure/crack monitoring device 127 so as to receive quantities (conveniently carried via data and/or signals) indicating variations of the damage(s) and/or fissure(s) and/or crack(s) detected and measured by said damage/fissure/crack monitoring device 127.

The monitoring and early warning system 1 basically implements the same operating logic as the system according to IT'545 as for:
- the exchange, between/among monitoring devices 121, 122 connected in peer-to-peer mode, of potential warning messages related to the detection of potential earthquakes and of corresponding confirmation and/or non-confirmation messages;
- the sending,
   - from the monitoring devices 121, 122 to the processing system 11, of potential warning messages related to the detection of potential earthquakes and,
   - from the processing system 11 to the monitoring devices 121, 122, of corresponding confirmation and/or non-confirmation messages;
- the sending, from the monitoring devices 121, 122 to the processing system 11, of potential warning messages related to the detection of potential structural failures; and
- the implementation, in case of confirmation of an earthquake and in case of a structural failure, of corresponding early warning actions by the processing system 11.

However, as previously mentioned, thanks to the use of one or two additional sources of information, i.e. the GPS RTK devices 124 and, preferably, also the damage/fissure/crack monitoring devices 127, the monitoring and early warning system 1 is able to implement, either at the level of single monitoring device 121, 122, or at the level of smart monitoring network 12, or at the level of processing system 11, much more reliable decision logics and much more accurate and punctual analyses than the system according to IT'545 (in which only vibration sensors were used).

In particular, in case of joint use of the vibration sensors 123 and the GPS RTK devices 124, the following first decision logic can be conveniently implemented:
- in case no vibration and no movement of the structure(s) are detected, no issue is detected;
- in case no vibration is detected, but an appreciable horizontal or vertical movement (e.g., beyond a certain predefined threshold) of the structure(s) is detected, the potential start of a landslide, a hydrogeological event or a subsidence phenomenon is detected;
- in case no vibration is detected (or a few vibrations are detected, i.e., within a certain predefined threshold), but a slow and continuous movement of the structure (s) is detected, a potential landslide under way is detected;
- in case no vibration is detected (or a few vibrations are detected, i.e., within a certain predefined threshold), but a slow and continuous vertical movement of the structure(s) is detected, a potential subsidence phenomenon under way is detected;
- in case no movement of the structure(s) is detected, but vibrations with an incremental trend of a linear type are detected, the need to monitor the structure (s) very carefully with respect to predefined limits is detected (for example established in specific technical and/or legal regulations - e.g., UNI 9916);
- in case no movement of the structure(s) is detected, but vibrations with a certain periodicity and with an incremental trend are detected, a situation related to external causes (e.g. traffic/works in progress) to be monitored carefully with respect to predefined limits is detected (for example established in specific technical and/or legal standards - e.g., UNI 9916);
- in case no movement of the structure(s) is detected, but significant vibrations with peaks outside the limits are detected (e.g., UNI 9916), important events to be notified are detected;
- in case of an overt seismic event without, however, any movement of the structure(s) being detected, it is proceeded with an analysis of the frequencies, of the PGA and UNI peaks and, if necessary, with any notifications;
- in case of a significant seismic event/movement of the structure(s), a potential loss of staticity or a potential structural failure of the structure(s) is detected that must be notified;
- in case of a significant seismic event/movement of all the structures in a given area, a tectonic plate movement is detected with notification for the structures that have had movements beyond a common differential.

Furthermore, in case of joint use, in addition to the vibration sensors 123 and the GPS RTK devices 124, of also the damage/fissure/crack monitoring devices 127, the following second decision logic can be conveniently implemented:
- in case of a normal vibration level, no movement and measured values related to the damages /fissures/cracks in a predefined safety interval, it is determined that the structure(s) has/have a normal behaviour and no criticalities are found;
- in case of low vibrations, appreciable movement of the structure (s) on the vertical or horizontal axis and small anomalies in the measured values related to the damages/fissures/cracks, the potential start of a landslide, a hydrogeological event or, in the case in which the movement is limited to the vertical axis, of a subsidence phenomenon is detected;

- in case of presence of a trend in the historical series of vibrations with any repeating acceleration patterns, no appreciable movement and measured values related to damages/fissures/cracks that are normal, a potential increase in the anthropic activity is detected (e.g., traffic, deterioration of the road surface, work in progress, etc.) and in this case, in order to understand the dangerousness of the vibrations, reference will be made to the reference regulations (e.g., UNI 9916);
- in case of peak accelerations beyond the thresholds established by the seismic risk maps, no movement, with simultaneous detection of a greater variability in the extent of the damages/fissures/cracks monitored in which, however, the values regress towards normal, also in this case, reference is made to the reference regulations;
- in case of peak accelerations beyond the reference thresholds, minimum shift of natural frequencies, movement of the structure(s) and variation of extent modified of the damages/fissures/cracks, a potential damage to the structure(s) is detected.

A further innovative aspect of the monitoring and early warning system 1 compared to the system according to IT'545 is represented by the use of different Machine Learning (ML) techniques, in the different steps of processing and analysis of the acquired data.

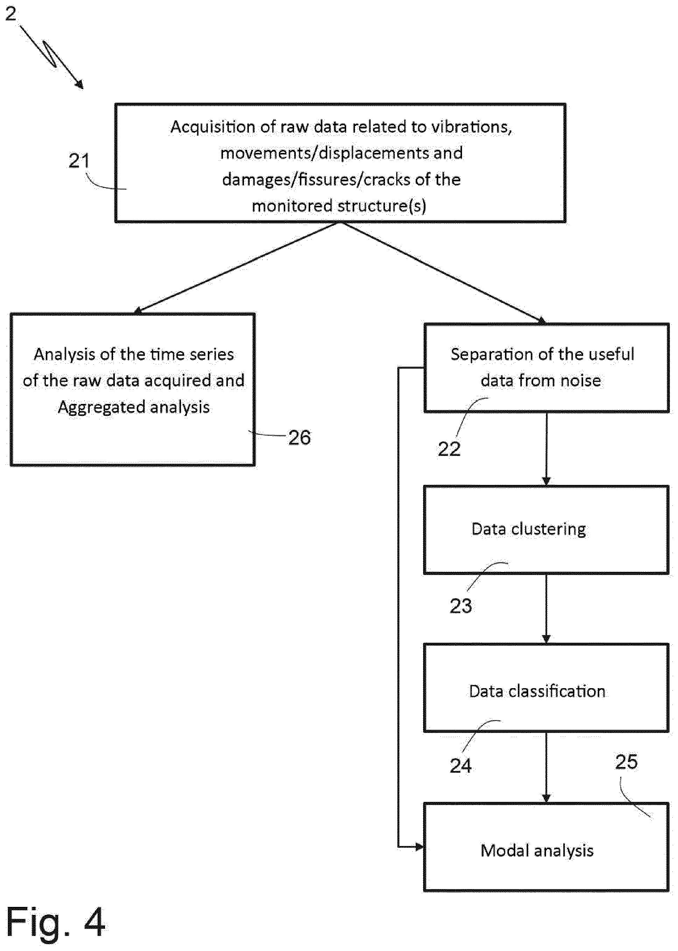

In this regard, Figure 4 schematically shows (in particular, by means of a flow diagram) a data acquisition, processing and analysis method (denoted as a whole with 2) implemented, in use, by the monitoring and early warning system 1 according to a preferred embodiment of the present invention.

Specifically, the data acquisition, processing and analysis method 2 can be conveniently implemented either at the level of a single monitoring device 121, 122, or at the level of the smart monitoring network 12, or at the level of the processing system 11.

More in detail, said data acquisition, processing and analysis method 2 includes the following steps:
- acquiring raw data related to vibrations, movements/displacements and damages/fissures/cracks of the structure(s) monitored by the vibration sensor(s) 123, by the GPS RTK device (s) 124 and by the damage/fissure/crack monitoring device(s) 127 - block 21 in Figure 4;
- separating useful data from noise - block 22 in Figure 4;
- clustering the data - block 23 in Figure 4;
- classifying the data - block 24 in Figure 4;
- carrying out a modal analysis - block 25 in Figure 4; and
- carrying out an analysis of the time series of the raw data acquired and an aggregated analysis - block 26 in Figure 4.

As regards the separation of useful data from noise (block 22 in Figure 4), ML techniques are used to make order in the large amount of raw data acquired, by analysing the flow of the data acquired through unsupervised algorithms (e.g., Restricted Boltzmann machine (RBM) and autoencoders) in order to separate useful data/signals from noise.

Subsequently, in the step of data clustering (block 23 in Figure 4), the useful data/signals are conveniently processed with non-parametric Bayesian techniques (e.g., Hierarchical Dirichlet Process-Hidden Markov Model - HDP-HMM) in order to obtain a clustering, i.e. a more refined grouping of all that can be considered as an event.

In many cases it is useful to isolate specific events within the data plot, in order to further analyse them, to calculate statistics or to simply count them. The initial clustering (block 23 in Figure 4) enables to train neural network architectures in a supervised way that are appointed for the identification of particular anomalies in the data plot (data classification - block 24 in Figure 4). For example, seismic events are recorded very frequently, especially by the devices installed in central and Northern Italy. In order to be able to identify them correctly and in a timely manner, a convolutional neural network was therefore conveniently trained, which reached an accuracy equal to 94.8% and which proved capable of identifying even low intensity events that traditional individuation algorithms have difficulty in grasping.

Furthermore, ML techniques are conveniently used also to understand the behaviour of the monitored structure(s) and to provide forecasts (Analysis of the time series of the raw data acquired and Aggregated analysis - block 26 in Figure 4). In this case, an approach based on the Generalized Additive Models (GAM) can be conveniently used, which make it possible to identify trends in the accelerometric activity, in the movements and dynamics of the fissure pattern. This type of analysis also enables to conveniently break down the historical series into the seasonal components thereof, thus highlighting the regularities present in the data plot by time horizons that can range from 24 hours to 365 days.

Finally, ML techniques are also conveniently employed in the modal analysis (block 25 in Figure 4) which has the aim of characterizing the monitored structure(s) in terms of natural frequencies and related modal forms. In fact, as is known, each building has its own vibration characteristics which manifest themselves in the form of natural vibration frequencies and relative vibration modes. Therefore, Bayesian algorithms are conveniently used to estimate the natural frequencies and a convolutional network is conveniently adopted to automate the peak-picking process (i.e., for the identification of the modal parameters, i.e., frequencies and vibration modes). This analysis is conveniently repeated over time in order to identify any frequency shifts that indicate possible damages to the structure (s) .

Moreover, the present invention can also be advantageously exploited for the validation of soil consolidation techniques (in particular, techniques based on bacterial calcification).

More specifically, this type of, completely natural, soil consolidation techniques aim at consolidating the soil on which a structure is built by using catalysing agents capable of accelerating the production of calcium carbonate (CaCO₃) by particular microorganisms present in the soil. The soil hardening process is progressive and takes a time that varies from site to site. The vibration sensors 123, the GPS RTK devices 124 and the damage/fissure/crack monitoring devices 127 can be conveniently exploited to measure the effectiveness of the intervention, as a progressive solidification of the soil will give rise to a change in the settlement dynamics of the structure and to a modification of the spectrum of the frequencies that these devices are able to record, as well as to a variation of the dynamics of the fissure pattern.

From the foregoing disclosure, the innovative characteristics and the innumerable technical advantages of the present invention are immediately evident for a person skilled in the art.

In this regard, it is important to note that the present invention allows to improve the operating efficiency, as well as the effectiveness and reliability of use, of the smart monitoring and early warning system according to IT'545.

Furthermore, the present invention also has the following further technical advantages:
- the vibration sensors allow to identify earthquakes and, thanks to the mechanism of dialogue with the neighbouring monitoring devices connected in peer-to-peer mode, which allows to minimize the risk of false positives, it is possible to execute automatic M2M safety procedures (Machine to Machine);
- by jointly analysing the data supplied by all the monitoring devices affected by the same event (e.g., an earthquake) it is possible to obtain the behaviour of all the structures in that area (for example, similar buildings generally tend to behave in a similar manner; therefore, in case of appreciable differences in the response, information can be obtained about the variables that can cause significantly different responses in similar structures, such as the soil);
- in case of a building which is subject to landslide/hydrogeological event/subsidence phenomenon, it is possible to understand how the event travels to the neighbouring structures; moreover, by crossing the accelerometric data, it is possible to understand if and how the external sources of vibration interact with the landslide phenomenon and in the evolution of the fissure pattern.

Moreover, it should also be noted that the GPS RTK devices allow to reduce the false positives of the positional monitoring due to antenna shaking. In fact, in case a seismic wave arrives, the GPS RTK devices work to compensate for the errors, offering again accurate data after the passage of the wave.

In conclusion, it is important to note that, although the invention described above makes particular reference to well-defined examples of embodiment, it is not to be considered limited to such examples of embodiment, as all the variants, modifications or simplifications covered by the attached claims fall within its scope.

## Claims

1. Monitoring and early warning system (1) comprising a processing system (11) and a network (12) of monitoring devices (121, 122) coupled to fixed structures arranged in a given region of the Earth's surface;
wherein each monitoring device (121, 122) is connected, via one or more telecommunication networks, to the processing system (11) and, in peer-to-peer mode, with one or more of the other monitoring devices (121, 122);
wherein each monitoring device (121, 122):
• is coupled to a respective fixed structure;
• comprises
- a respective vibration sensor (123) configured to detect and measure vibrations of said respective fixed structure and
- a respective satellite positioning device (124) configured to detect and measure movements of the respective fixed structure; and
• is configured to detect potential warning situations related to earthquakes and/or structural failures of the respective fixed structure on the basis of data supplied by the respective vibration sensor (123) and on the basis of messages exchanged with the processing system (11) and with the other monitoring devices (121, 122) with which it is connected in peer-to-peer mode;
wherein the processing system (11) is configured to, in case of detection of potential warning situations related to earthquakes and/or structural failures, carry out corresponding early warning actions;
wherein the processing system (11) and/or the monitoring devices (121, 122) is/are configured to:
• carry out processing and analyses of the data supplied by the vibration sensors (123) and of data supplied by the satellite positioning devices (124) by using predefined machine learning techniques;
• detect the potential warning situations related to earthquakes and/or structural failures also on the basis of the data supplied by the satellite positioning devices (124) and/or on the basis of results of the processing and analyses carried out; and
• also detect potential warning situations related to landslides/mudslides, hydrogeological events and subsidence phenomena on the basis of the data supplied by the vibration sensors (123) and by the satellite positioning devices (124) and/or on the basis of the results of the processing and analyses carried out;
**characterised in that** the processing system (11) and/or the monitoring devices (121, 122) is/are configured to carry out said processing and analyses by implementing the following operations:
• separating useful data from noise by using one or more first predefined machine learning techniques;
• clustering the useful data by using one or more second predefined machine learning techniques thereby obtaining clustered data related to recorded events;
• classifying the clustered data by using one or more third predefined machine learning techniques so as to identify specific events in the clustered data;
• carrying out a modal analysis of the fixed structures on the basis of the classified data and the useful data and by using one or more fourth predefined machine learning techniques so as to estimate natural vibration frequencies and related vibration modes of said fixed structures; and
• carrying out aggregated analyses of the data supplied by the vibration sensors (123) and by the satellite positioning devices (124) by using one or more fifth predefined machine learning techniques so as to identify a behaviour over time of the fixed structures.

2. The system according to claim 1, wherein the satellite positioning devices (124) are based on real-time kinematic satellite positioning technology.

3. The system according to claim 1 or 2, wherein the monitoring devices include specific monitoring devices (122) which comprise, each, a respective damage/fissure/crack monitoring device (127) configured to detect and measure variations of damages/fissures/cracks of the respective fixed structure;
and wherein the processing system (11) and/or the specific monitoring devices (122) is/are configured to:
• also carry out processing and analyses of data supplied by the damage/fissure/crack monitoring devices (127) by using the predefined machine learning techniques;
• detect the potential warning situations related to earthquakes and/or structural failures also on the basis of the data supplied by the damage/fissure/crack monitoring devices (127); and
• detect the potential warning situations related to landslides/mudslides, hydrogeological events and subsidence phenomena also on the basis of said data supplied by the damage/fissure/crack monitoring devices (127).

4. The system of claim 3, wherein the damage/fissure/crack monitoring devices (127) are extensometer-type devices.

5. Electronic device designed to be connected to at least a telecommunication network and to be coupled to a respective fixed structure;
said electronic device comprising a vibration sensor (123) configured to detect and measure vibrations of the respective fixed structure and a satellite positioning device (124) configured to detect and measure movements of said respective fixed structure;
said electronic device being configured as one of the monitoring devices (121, 122) of the monitoring and early warning system (1) as claimed in any preceding claim, wherein the monitoring device is configured to carry out processing and analyses of the data supplied by the vibration sensors (123) and of data supplied by the satellite positioning devices (124) by using the predefined machine learning techniques.

6. The electronic device of claim 5, further comprising a damage/fissure/crack monitoring device (127) configured to detect and measure variations of damages/fissures/cracks of the respective fixed structure.

7. Use of the electronic device as claimed in claim 5 or 6 for monitoring and/or validating execution of a soil consolidation technique.

8. The use of the electronic device according to claim 7, wherein the soil consolidation technique is based on bacterial calcification.

9. Processing system designed to be connected to at least a telecommunication network and configured as the processing system (11) of the monitoring and early warning system (1) as claimed in any claim 1-4, wherein the processing system is configured to carry out processing and analyses of the data supplied by the vibration sensors (123) and of data supplied by the satellite positioning devices (124) by using the predefined machine learning techniques.

## Patentansprüche

1. Überwachungs- und Frühwarnsystem (1), umfassend ein Verarbeitungssystem (11) und ein Netzwerk (12) von Überwachungsvorrichtungen (121, 122), die an feste Strukturen gekoppelt sind, die in einer bestimmten Region der Erdoberfläche angeordnet sind;
wobei jede Überwachungsvorrichtung (121, 122) über ein oder mehrere Telekommunikationsnetzwerke mit dem Verarbeitungssystem (11) und im Peer-to-Peer-Modus mit einer oder mehreren der anderen Überwachungsvorrichtung (121, 122) verbunden ist;
wobei jede Überwachungsvorrichtung (121, 122):
• an eine jeweilige feste Struktur gekoppelt ist;
• umfasst
- einen jeweiligen Vibrationssensor (123), der konfiguriert ist, um Vibrationen der jeweiligen festen Struktur zu erfassen und zu messen, und
- eine jeweilige Satellitenpositionierungsvorrichtung (124), die konfiguriert ist, um Bewegungen der jeweiligen festen Struktur zu erfassen und zu messen; und
• ist konfiguriert, um potenzielle Warnsituationen im Zusammenhang mit Erdbeben und/oder Strukturversagen der jeweiligen festen Struktur auf der Grundlage von Daten, die von dem jeweiligen Vibrationssensor (123) geliefert werden, und auf der Grundlage von Nachrichten, die mit dem Verarbeitungssystem (11) und mit den anderen Überwachungsvorrichtungen (121, 122), mit denen es im Peer-to-Peer-Modus verbunden ist, ausgetauscht werden, zu erfassen;
wobei das Verarbeitungssystem (11) dazu konfiguriert ist, im Falle der Erfassung potenzieller Warnsituationen im Zusammenhang mit Erdbeben und/oder Strukturversagen entsprechende Frühwarnmaßnahmen durchzuführen;
wobei das Verarbeitungssystem (11) und/oder die Überwachungsvorrichtungen (121, 122) zu Folgendem konfiguriert sind:
• Durchführen von Verarbeitung und Analysen der von den Vibrationssensoren (123) gelieferten Daten und der von den Satellitenpositionierungsvorrichtungen (124) gelieferten Daten unter Verwendung vordefinierter Techniken des maschinellen Lernens;
• Erfassen der potenziellen Warnsituationen im Zusammenhang mit Erdbeben und/oder Strukturversagen auch auf der Grundlage der von den Satellitenpositionierungsvorrichtungen (124) gelieferten Daten und/oder auf der Grundlage der Ergebnisse der durchgeführten Verarbeitung und Analysen; und
• Erfassen auch von potenziellen Warnsituationen im Zusammenhang mit Erdrutschen/Schlammlawinen, hydrogeologischen Ereignissen und Setzungsphänomenen auf der Grundlage der von den Vibrationssensoren (123) und von den Satellitenpositionierungsvorrichtungen (124) gelieferten Daten und/oder auf der Grundlage der Ergebnisse der durchgeführten Verarbeitung und Analysen;
**dadurch gekennzeichnet, dass** das Verarbeitungssystem (11) und/oder die Überwachungsvorrichtungen (121, 122) so konfiguriert ist/sind, dass es/sie die Verarbeitung und Analysen durchführt/en, indem es/sie die folgenden Vorgänge implementiert/en:
• Trennen von Nutzdaten von Rauschen unter Verwendung einer oder mehrerer erster vordefinierter Techniken des maschinellen Lernens;
• Clustern der Nutzdaten unter Verwendung einer oder mehrerer zweiter vordefinierter Techniken des maschinellen Lernens, wodurch geclusterte Daten im Zusammenhang mit aufgezeichneten Ereignissen erhalten werden;
• Klassifizieren der geclusterten Daten unter Verwendung einer oder mehrerer dritter vordefinierter Techniken des maschinellen Lernens, um spezifische Ereignisse in den geclusterten Daten zu identifizieren;
• Durchführen einer Modalanalyse der festen Strukturen auf der Grundlage der klassifizierten Daten und der Nutzdaten und unter Verwendung einer oder mehrerer vierter vordefinierter Techniken des maschinellen Lernens, um Eigenschwingungsfrequenzen und zugehörige Schwingungsmodi der festen Strukturen zu schätzen; und
• Durchführen aggregierter Analysen der von den Vibrationssensoren (123) und von den Satellitenpositionierungsvorrichtungen (124) gelieferten Daten unter Verwendung einer oder mehrerer fünfter vordefinierter Techniken des maschinellen Lernens, um ein Verhalten im Laufe der Zeit der festen Strukturen zu identifizieren.

2. System nach Anspruch 1, wobei die Satellitenpositionierungsvorrichtungen (124) auf Echtzeit-Kinematik-Satellitenpositionierungstechnologie basieren.

3. System nach Anspruch 1 oder 2, wobei die Überwachungsvorrichtungen spezifische Überwachungsvorrichtungen (122) beinhalten, die jeweils eine jeweilige Schadens-/Spalt-/Riss-Überwachungsvorrichtung (127) umfassen, die konfiguriert ist, um Variationen von Schäden/Spalten/Rissen der jeweiligen festen Struktur zu erfassen und zu messen;
und wobei das Verarbeitungssystem (11) und/oder die spezifischen Überwachungsvorrichtungen (122) konfiguriert sind, um:
• auch die Verarbeitung und Analysen der von den Schadens-/Spalt-/Riss-Überwachungsvorrichtungen (127) gelieferten Daten unter Verwendung der vordefinierten Techniken des maschinellen Lernens durchzuführen;
• die potenziellen Warnsituationen im Zusammenhang mit Erdbeben und/oder Strukturversagen auch auf der Grundlage der von den Schadens-/Spalt-/Riss-Überwachungsvorrichtungen (127) gelieferten Daten zu erfassen; und
• die potenziellen Warnsituationen im Zusammenhang mit Erdrutschen/Schlammlawinen, hydrogeologischen Ereignissen und Setzungsphänomenen auch auf der Grundlage der von den Schadens-/Spalt-/Riss-Überwachungsvorrichtungen (127) gelieferten Daten zu erfassen.

4. System nach Anspruch 3, wobei die Schadens-/Spalt-/Riss-Überwachungsvorrichtungen (127) Vorrichtungen vom Extensometer-Typ sind.

5. Elektronische Vorrichtung, die dazu ausgelegt ist, mit mindestens einem Telekommunikationsnetzwerk verbunden und an eine jeweilige feste Struktur gekoppelt zu werden;
wobei die elektronische Vorrichtung einen Vibrationssensor, der konfiguriert ist, um Vibrationen der jeweiligen festen Struktur zu erfassen und zu messen, und eine Satellitenpositionierungsvorrichtung (124) umfasst, die konfiguriert ist, um Bewegungen der jeweiligen festen Struktur zu erfassen und zu messen;
wobei die elektronische Vorrichtung als eine der Überwachungsvorrichtungen (121, 122) des Überwachungs- und Frühwarnsystems (1) nach einem der vorhergehenden Ansprüche konfiguriert ist, wobei die Überwachungsvorrichtung konfiguriert ist, um eine Verarbeitung und Analysen der von den Vibrationssensoren (123) gelieferten Daten und der von den Satellitenpositionierungsvorrichtungen (124) gelieferten Daten unter Verwendung der vordefinierten Techniken des maschinellen Lernens durchzuführen.

6. Elektronische Vorrichtung nach Anspruch 5, ferner umfassend eine Schadens-/Spalt-/Riss-Überwachungsvorrichtung (127), die konfiguriert ist, um Variationen von Schäden/Spalten/Rissen der jeweiligen festen Struktur zu erfassen und zu messen.

7. Verwendung der elektronischen Vorrichtung nach Anspruch 5 oder 6 zur Überwachung und/oder Validierung der Ausführung einer Bodenverfestigungstechnik.

8. Verwendung der elektronischen Vorrichtung nach Anspruch 7, wobei die Bodenverfestigungstechnik auf bakterieller Verkalkung basiert.

9. Verarbeitungssystem, das dazu ausgelegt ist, mit mindestens einem Telekommunikationsnetzwerk verbunden zu werden, und als Verarbeitungssystem (11) des Überwachungs- und Frühwarnsystems (1) nach einem der Ansprüche 1-4 konfiguriert ist, wobei das Verarbeitungssystem dazu konfiguriert ist, eine Verarbeitung und Analysen der von den Vibrationssensoren (123) gelieferten Daten und der von den Satellitenpositionierungsvorrichtungen (124) gelieferten Daten unter Verwendung der vordefinierten Techniken des maschinellen Lernens durchzuführen.

## Revendications

1. Système de surveillance et d'alerte précoce (1) comprenant un système de traitement (11) et un réseau (12) de dispositifs de surveillance (121, 122) couplés à des structures fixes disposées dans une région donnée de la surface terrestre ;
dans lequel chaque dispositif de surveillance (121, 122) est connecté, via un ou plusieurs réseaux de télécommunication, au système de traitement (11) et, en mode pair-à-pair, à un ou plusieurs autres dispositifs de surveillance (121, 122) ;
dans lequel chaque dispositif de surveillance (121, 122) :
• est couplé à une structure fixe respective ;
• comprend
- un capteur de vibrations respectif (123) configuré pour détecter et mesurer les vibrations de ladite structure fixe respective et
- un dispositif de positionnement par satellite respectif (124) configuré pour détecter et mesurer les déplacements de la structure fixe respective ; et
• est configuré pour détecter des situations d'alerte potentielles relatives à des tremblements de terre et/ou des défaillances structurelles de la structure fixe concernée sur la base des données fournies par le capteur de vibrations concerné (123) et sur la base des messages échangés avec le système de traitement (11) et avec les autres dispositifs de surveillance (121, 122) avec lesquels il est connecté en mode pair-à-pair ;
le système de traitement (11) étant configuré pour, en cas de détection de situations d'alerte potentielles relatives à des tremblements de terre et/ou des défaillances structurelles, effectuer les actions d'alerte précoce correspondantes ;
le système de traitement (11) et/ou les dispositifs de surveillance (121, 122) étant configuré(s) pour :
• effectuer un traitement et des analyses des données fournies par les capteurs de vibrations (123) et des données fournies par les dispositifs de positionnement par satellite (124) en utilisant des techniques prédéfinies d'apprentissage automatique ;
• détecter les situations d'alerte potentielles relatives à des tremblements de terre et/ou des défaillances structurelles, également sur la base des données fournies par les dispositifs de positionnement par satellite (124) et/ou sur la base des résultats du traitement et des analyses effectués ; et
• détecter également des situations d'alerte potentielles relatives à des glissements de terrain/coulées de boue, des événements hydrogéologiques et des phénomènes de subsidence sur la base des données fournies par les capteurs de vibrations (123) et par les dispositifs de positionnement par satellite (124) et/ou sur la base des résultats du traitement et des analyses effectués ;
**caractérisé en ce que** le système de traitement (11) et/ou les dispositifs de surveillance (121, 122) est/sont configuré(s) pour effectuer ledit traitement et lesdites analyses en mettant en œuvre les opérations suivantes :
• séparer les données utiles du bruit en utilisant une ou plusieurs technique(s) prédéfinie(s) d'apprentissage automatique ;
• regrouper les données utiles à l'aide d'une ou de plusieurs seconde(s) technique(s) prédéfinie(s) d'apprentissage automatique, ce qui permet d'obtenir des données regroupées relatives à des événements enregistrés ;
• classer les données regroupées en utilisant une ou plusieurs technique(s) prédéfinie(s) d'apprentissage automatique afin d'identifier des événements spécifiques dans les données regroupées ;
• effectuer une analyse modale des structures fixes sur la base des données classées et des données utiles et en utilisant une ou plusieurs quatrième(s) technique(s) prédéfinie(s) d'apprentissage automatique afin d'estimer les fréquences de vibration naturelles et les modes de vibration connexes desdites structures fixes ; et
• effectuer des analyses agrégées des données fournies par les capteurs de vibrations (123) et par les dispositifs de positionnement par satellite (124) en utilisant une ou plusieurs cinquième(s) techniques prédéfinie(s) d'apprentissage automatique afin d'identifier un comportement dans le temps des structures fixes.

2. Système selon la revendication 1, dans lequel les dispositifs de positionnement par satellite (124) sont basés sur une technologie de positionnement par satellite cinématique en temps réel.

3. Système selon la revendication 1 ou 2, dans lequel les dispositifs de surveillance incluent des dispositifs de surveillance spécifiques (122) qui comprennent chacun un dispositif de surveillance des dommages/fissures/fentes (127) configuré pour détecter et mesurer les variations des dommages/fissures/fentes de la structure fixe respective ;
et dans lequel le système de traitement (11) et/ou les dispositifs de surveillance spécifiques (122) est/sont configurés pour :
• effectuer également un traitement et des analyses des données fournies par les dispositifs de surveillance des dommages/fissures/fentes (127) en utilisant les techniques prédéfinies d'apprentissage automatique ;
• détecter les situations d'alerte potentielles relatives à des tremblements de terre et/ou des défaillances structurelles également sur la base des données fournies par les dispositifs de surveillance des dommages/fissures/fentes (127) ; et
• détecter les situations d'alerte potentielles relatives à des glissements de terrain/coulées de boue, des événements hydrogéologiques et des phénomènes de subsidence, également sur la base des données fournies par les dispositifs de surveillance des dommages/fissures/fentes (127).

4. Système selon la revendication 3, dans lequel les dispositifs de surveillance des dommages/fissures/fentes (127) sont des dispositifs de type extensomètre.

5. Dispositif électronique conçu pour être connecté à au moins un réseau de télécommunication et pour être couplé à une structure fixe respective ;
ledit dispositif électronique comprenant un capteur de vibrations configuré pour détecter et mesurer les vibrations de la structure fixe respective et un dispositif de positionnement par satellite (124) configuré pour détecter et mesurer les déplacements de ladite structure fixe respective ;
ledit dispositif électronique étant configuré comme l'un des dispositifs de surveillance (121, 122) du système de surveillance et d'alerte précoce (1) selon l'une quelconque des revendications précédentes, dans lequel le dispositif de surveillance est configuré pour effectuer un traitement et des analyses des données fournies par les capteurs de vibrations (123) et des données fournies par les dispositifs de positionnement par satellite (124) en utilisant les techniques prédéfinies d'apprentissage automatique.

6. Dispositif électronique selon la revendication 5, comprenant en outre un dispositif de surveillance des dommages/fissures/fentes (127) configuré pour détecter et mesurer les variations des dommages/fissures/fentes de la structure fixe respective.

7. Utilisation du dispositif électronique selon la revendication 5 ou 6 pour contrôler et/ou valider l'exécution d'une technique de consolidation du sol.

8. Utilisation de l'appareil électronique selon la revendication 7, dans laquelle la technique de consolidation du sol est basée sur la calcification bactérienne.

9. Système de traitement conçu pour être connecté à au moins un réseau de télécommunication et configuré comme le système de traitement (11) du système de surveillance et d'alerte précoce (1) selon l'une des revendications 1 à 4, dans lequel le système de traitement est configuré pour effectuer un traitement et des analyses des données fournies par les capteurs de vibrations (123) et des données fournies par les dispositifs de positionnement par satellite (124) en utilisant les techniques prédéfinies d'apprentissage automatique.
